(19) Europäisches Patentamt / European Patent Office / Office européen des brevets

(11) **EP 1 564 925 B1**

(12) **EUROPÄISCHE PATENTSCHRIFT**

(45) Veröffentlichungstag und Bekanntmachung des Hinweises auf die Patenterteilung:
**26.03.2008 Patentblatt 2008/13**

(51) Int Cl.:
*H04L 7/033* (2006.01)　　*H03D 13/00* (2006.01)
*H03L 7/18* (2006.01)　　*G06F 1/12* (2006.01)
*H04J 3/06* (2006.01)

(21) Anmeldenummer: **05002473.6**

(22) Anmeldetag: **05.02.2005**

(54) **Verfahren und Vorrichtung zum Synchronisieren einer Funktionseinheit auf eine vorgegebene Taktfrequenz**

Method and apparatus for synchronising a functional unit to a predetermined clock frequency

Procédé et dispositif de synchronisation d'une unité fonctionnelle sur une fréquence d'horloge prédéterminée

(84) Benannte Vertragsstaaten:
**DE FR**

(30) Priorität: **10.02.2004 DE 102004006398**

(43) Veröffentlichungstag der Anmeldung:
**17.08.2005 Patentblatt 2005/33**

(73) Patentinhaber: **ATMEL Germany GmbH**
**74072 Heilbronn (DE)**

(72) Erfinder:
• **Hauser, Clemens, Dipl.-Ing.**
**74074 Heilbronn (DE)**
• **Sörensen, Arno, Dipl.-Ing.**
**74081 Heilbronn (DE)**

(74) Vertreter: **Müller, Wolf-Christian et al**
**Koch Müller Patentanwalts GmbH**
**Maaßstrasse 32/1**
**69123 Heidelberg (DE)**

(56) Entgegenhaltungen:
**EP-A- 0 312 671　　WO-A-02/076031**
**DE-A- 4 418 622　　DE-A1- 19 911 945**
**US-A1- 2002 052 707**

• **PATENT ABSTRACTS OF JAPAN Bd. 004, Nr. 165 (E-034), 15. November 1980 (1980-11-15) & JP 55 112058 A (NEC CORP), 29. August 1980 (1980-08-29)**

**Beschreibung**

Die Erfindung betrifft ein Verfahren zum Synchronisieren einer Funktionseinheit, wie einer Empfänger- und Auslese-Schaltung in einem integrierten Schaltkreis, auf eine Taktfrequenz eines Signals, insbesondere eines Datensignals, wobei Takte eines internen Oszillators der Funktionseinheit zwischen vorbestimmten Flanken des Signals gezählt werden, aus der Taktfrequenz des internen Oszillators und dem Zählwert ein Teilerverhältnis zwischen Signaltakt und internem Oszillatortakt durch Division bestimmt und mit einem vorgegebenen Teilerverhältnis der Funktionseinheit verglichen wird, woraufhin in Abhängigkeit von dem Vergleichsergebnis ein Anpassen des vorgegebenen Teilerverhältnisses durch Addieren oder Subtrahieren eines Wertes aus einer Anzahl vorgegebener Werte erfolgt.

Weiterhin betrifft die Erfindung eine zur Durchführung des Verfahrens geeignete Vorrichtung.

Auf vielfältigen Gebieten der Technik ergeben sich die Situationen, in denen eine Datenquelle, beispielsweise ein Mikrocontroller, serielle Daten mit einer bestimmten Datenrate, d.h. einem bestimmten Signaltakt über eine unidirektionale Datenverbindung sendet. Bei dieser Verbindung kann es sich beispielsweise um einen Eindrahtbus ohne Rückmeldefähigkeit handeln. Die Daten gelangen zu einem Empfänger, z.B. in einem integrierten Schaltkreis (IC), und sollen vom diesem ausgewertet werden. Da jedoch Sender (Datenquelle) und Empfänger (IC) in der Regel keinen gemeinsamen Takt besitzen, muss sich der Empfänger auf den Sender synchronisieren und das in den Daten enthaltene Taktsignal aus diesen zurückgewinnen, um die Daten bitweise richtig abfragen zu können.

Üblicherweise wird dabei der Signaltakt als Bruchteil eines internen Oszillortaktes des Empfängers dargestellt. Der Oszillatortakt wird regelmäßig in dem IC durch einen internen (RC-)Oszillator vorgegeben, dessen Taktfrequenz nur innerhalb gewisser Grenzen bekannt ist. Mit Beginn eines Startbits des Datensignals wird ein Zähler gestartet, der mit jeder vergangenen internen Taktperiode, kurz: mit jedem internen Takt, inkrementiert wird. Ist ein Zählerstand erreicht, der dem (Teiler-)Verhältnis zwischen Datentakt und internem Oszillatortakt des IC entspricht, wird der Zähler zurück auf Null gesetzt und beginnt erneut zu laufen. Dies entspricht bei korrekter Synchronisation gerade dem Beginn des nächsten Datenbits. Genau bei der Hälfte des Teilers, d.h. in der Mitte des Datenbits wird der Buspegel abgefragt und somit das entsprechende Bit gelesen. Ein weiterer Zähler beendet diesen Vorgang, wenn eine bestimmte Anzahl Bits gelesen wurde.

Es besteht nun die grundsätzliche Gefahr, dass der Lesevorgang aufgrund einer fehlerhaften Synchronisation von Sender und Empfänger scheitert, was gravierende Auswirkungen nach sich ziehen kann. Da insbesondere bei unidirektionalen Übertragungsmedien keine Rückmeldemöglichkeit besteht, kann der Empfänger kein bekanntes Synchronisationssignal zur nachträglichen erneuten Synchronisation beim Senden anfordern; weiterhin kann auch ein falsch erkanntes Datum nicht erneut angefordert werden. Fehlerhafte Synchronisation bedeutet in diesem Zusammenhang, dass der Teiler von seinem korrekten Wert nach oben oder unten abweicht. In der Folge wird der Zähler nicht wie angestrebt am Ende des Datenbits sondern bereits etwas früher oder erst etwas später zurück gesetzt. Entsprechend erfolgt auch die Abfrage des Buspegels nicht mehr in der Mitte des Bits, wobei sich die Verschiebung mit fortschreitender Anzahl der abzufragenden Bits summiert. Wenn das letzte Bit einer Sequenz gerade noch richtig abgefragt wird, verhält sich das System tolerant gegenüber der Fehlsynchronisation. Ansonsten kann es zu Doppelabfragen und/oder einem Auslassen einzelner Bits kommen. Da jedoch die Taktfrequenz des Empfängers fertigungsbedingt nur in gewissen Grenzen ($\pm 10\%$) bekannt ist, lässt sich kein fester Teiler zwecks dauerhafter Synchronisation des Systems aus Sender und Empfänger angeben.

Um eine sichere Synchronisation von Sender und Empfänger zu erreichen, wurde daher bei vorbekannten System zur Datenübertragung, wie dem LIN-Bus (Local Interconnect Network; vgl. LIN Protocol Specification, Revision 1.1, 2000) vorgeschlagen, in regelmäßigen Abständen vor jeder Datenübertragung nach einer Synchronisationspause vorbestimmter Mindestlänge ein sog. Synchronisationsfeld zu senden, um Sender und Empfänger zu synchronisieren. Dabei ist insbesondere als nachteilig anzusehen, dass durch die notwendigen Sendeunterbrechungen nur eine begrenzte Datenrate für Nutzdaten verfügbar ist. Weiterhin führt ein einmaliger Übertragungsfehler während des Synchronisationsfeldes zu einer Fehlsynchronisation während der folgenden Datenübertragung.

Zudem kann sich die Taktfrequenz des Empfängers während des Betriebs ändern, beispielsweise aufgrund von Temperatureinflüssen, so dass auch bei einmalig korrekter Synchronisation die Möglichkeit einer nachträglich falschen Auswertung besteht.

Aus der WO 02/076031 A2 sind Verfahren und Vorrichtung zur Synchronisation wenigstens eines Teilnehmers eines Bussystems bekannt, bei denen ohne Multiplikations- oder Divisionsoperationen eine zur Systemtaktperiode synchronisierte lokale Taktperiode erzeugt wird, indem nach Maßgabe eines wiederkehrenden Ereignisses eine globale und eine lokale Taktperiode bestimmt werden, aus deren Differenz sich eine variable Größe zum Anpassen des Teilerverhältnisses ergibt. Hierbei ist insbesondere als nachteilig anzusehen, dass sich auftretende Signalstörungen über die variable Größe unmittelbar voll auf den zu synchronisierenden lokalen Takt auswirken, was anschließend zu einer fehlerhaften Signalabfrage führen kann.

Aus der EP 0 312 671 A1 sind ein gattungsgemäßes Verfahren und eine entsprechende Vorrichtung bekannt, bei denen ein gegenwärtiges Teilerverhältnis durch Addieren oder Subtrahieren eines festen Wertes angepasst wird, wenn ein Zählwert, der zwischen einer ersten (steigenden) und einer zweiten (fallenden) Flanke eines binären Signals ermittelt wird, bestimmten Bedingungen genügt. Hierbei ist insbesondere als nachteilig anzusehen, dass sich Fehler, die in einer analogen Umgebung zum Ausmessen der Bitlänge von Low- und Highbits regelmäßig entstehen, akkumulieren können.

Der Erfindung liegt demgegenüber die Aufgabe zugrunde, ein Verfahren und eine Vorrichtung zu schaffen, mit denen sich die genannten Nachteile des Standes der Technik vermeiden lassen, wobei außerdem eine erreichte Synchronisation nicht durch punktuell auftretende Fehler vollständig zerstört wird und zudem eine gewisse Fehlertoleranz gegeben ist, unter anderem gegenüber Fehlern, die in einer analogen Umgebung zum Ausmessen der Bitlänge von Low- und Highbits regelmäßig entstehen.

Die Aufgabe wird bei einem Verfahren der eingangs genannten Art dadurch gelöst, dass die Takte des internen Oszillators zwischen jeweils zwei fallenden Flanken oder zwei steigenden Flanken des Signals gezählt werden.

Darüber hinaus wird die Aufgabe gelöst durch eine Vorrichtung der eingangs genannten Art, aufweisend: Zählermittel zum Bestimmen einer Anzahl von Takten eines internen Oszillators der Funktionseinheit zwischen vorbestimmten Flanken des Signals; Bestimmungsmittel, die zum Bestimmen eines Teilerverhältnisses zwischen Signaltakt und internem Oszillatortakt durch Division ausgebildet sind; Vergleichsmittel zum Vergleichen des Teilerverhältnisses mit einem vorgegebenen Teilerverhältnis der Funktionseinheit; und Anpassungsmittel zum Anpassen des vorgegebenen Teilerverhältnisses in Abhängigkeit von dem Vergleichsergebnis, die zum Addieren und Subtrahieren eines Wertes aus einer Anzahl vorgegebener Werte ausgebildet sind, wobei sich die erfindungsgemäße Vorrichtung dadurch auszeichnet, dass die Zählermittel zum Zählen der Takte des internen Oszillators zwischen jeweils zwei fallenden Flanken oder zwei steigenden Flanken des Signals ausgebildet sind.

Erfindungsgemäß wird also die Synchronisation während der laufenden Datenübertragung durchgeführt, wobei ein Synchronisationsergebnis, d.h. ein ermittelter Teiler nicht direkt und absolut verwendet wird, sondern immer nur zum Anpassen des letzten, vorgegebenen Teilers nach einem Vergleich mit diesem dient. Auf diese Weise ergibt sich eine sichere Synchronisation auch am Ende einer Datensequenz, und fertigungsbedingte und/oder temperaturabhängige Toleranzen bzw. Veränderungen der internen Oszillatorfrequenz werden ausgeglichen. Zudem ist die gesamte Datenrate für Nutzsignale verfügbar, da das Senden gesonderter Synchronisationssequenzen entfällt.

In Weiterbildung des erfindungsgemäßen Verfahrens ist vorgesehen, dass das Anpassen des Teilerverhältnis nach folgenden Regeln erfolgt:

$$TV' = TV + 1, \text{ für } N/2 > TV;$$

$$TV' = TV - 1, \text{ für } N/2 < TV;$$

$$TV' = TV \quad , \text{ für } N/2 = TV;$$

wobei TV das vorgegebene Teilerverhältnis, TV' das angepasste Teilerverhältnis und N den Zählwert bezeichnet. Auf diese Weise wird lediglich eine allmähliche Anpassung der Synchronisation vorgenommen, so dass ein einzelner Übertragungsfehler nicht zu einem völlig falschen Teiler sondern nur zu einem Fehler um den Wert 1 führt. Dieser Fehler wird bei der nächsten korrekten Übertragung wieder kompensiert. Entsprechend zeichnet sich eine bevorzugte Ausgestaltung der erfindungsge= mäßen Vorrichtung dadurch aus, dass die Anpassungsmittel zum Anpassen des Teilerverhältnisses nach den vorstehend genannten Regeln ausgebildet sind.

Das erfindungsgemäße Verfahren sieht vor, dass die Takte des internen Oszillators zwischen jeweils zwei fallenden oder steigenden Flanken des Signals gezählt werden. Entsprechend sind die Zählermittel der erfindungsgemäßen Vorrichtung vorzugsweise zum Zählen der Takte des internen Oszillators zwischen jeweils zwei fallenden oder steigenden Flanken des Signals ausgebildet. Somit wird permanent während der Daten= übertragung immer dann synchronisiert, wenn die Folge "1010" bzw. "0101" in den Daten auftaucht, ohne dass hierzu ein gesondertes Synchronisationssignal notwendig wäre.

Generell erfolgt die Ermittlung der Bitlänge also mit zwei gleichen Flanken (fallend oder steigend). Auf diese Weise kompensieren sich automatisch alle Fehler, die entstehen können, wenn die Bitlängen eines Low- oder Highbits durch die analoge Umgebung verschieden ausgemessen werden. Mögliche Ursachen hierfür sind:

1. Die Komparatorschwelle liegt nicht exakt in der Mitte der analogen Signalpegel.

2. Eine eventuell verwendete Hysterese des Komparators ist asymmetrisch.

3. Die Anstiegs- und Abfallzeiten des analogen Bussignals sind unterschiedlich.

4. Das Bussignal selbst hat unterschiedliche Lowbit- und Highbit-Längen.

5. Der Komparator besitzt unterschiedliche Slew-Raten für einen Low-High- oder einen High-Low-Übergang.

6. Der Komparator hat unterschiedliche Verzögerungszeiten (Delays).

Um im weiteren Verlauf der Übertragung auf die jeweils angepassten Teiler zurückgreifen zu können, sieht eine Weiterbildung des Verfahrens vor, dass bei einem Erreichen der zweiten vorbestimmten Signalflanke der Zählwert zurückgesetzt und das angepasste Teilerverhältnis als vorzugebendes Teilerverhältnis gespeichert wird. Eine erfindungsgemäße Vorrichtung weist zu diesem Zweck Speichermittel zum Speichern des angepassten Teilerverhältnisses als neu vorzugebendes Teilerverhältnis auf.

In äußerst bevorzugter Weiterbildung des Erfindungsgegenstands kann vorgesehen sein, dass bei Verlassen eines Gültigkeitsbereichs für den Zählwert (Über- oder Unterschreiten eines Maximal- bzw. Minimalwerts) keine Anpassung des Teilerverhältnisses erfolgt bzw. dass die Vergleichs- und/oder Anpassungsmittel zum Verhindern einer Anpassung des Teilerverhältnisses ausgebildet sind. Somit werden lokale Übertragungsfehler auf dem Bus, wie Spikes oder dergleichen, nicht zur Teilerbestimmung herangezogen; des weiteren wird ein Überlaufen des Zählers verhindert, der sonst zur Folge haben könnte, dass ein falscher Zählwert nach dem Überlauf als gültig interpretiert wird, was in wiederholter Abfolge die gesamte Synchronisation gefährden würde.

Weitere Eigenschaften und Vorteile der Erfindung ergeben sich aus der nachfolgenden Beschreibung von Ausführungsbeispielen anhand der Zeichnung. Es zeigt:

Fig. 1   ein Blockschaltbild der erfindungsgemäßen Vorrichtung;

Fig. 2   Prinzipskizzen betreffend den Gültigkeitsbereich einer erfindungsgemäßen Teileranpassung sowie das Vermeiden eines Zählerüberlaufs im Zuge des erfindungsgemäßen Verfahrens; und

Fig. 3   ein Ablaufdiagramm des erfindungsgemäßen Verfahrens.

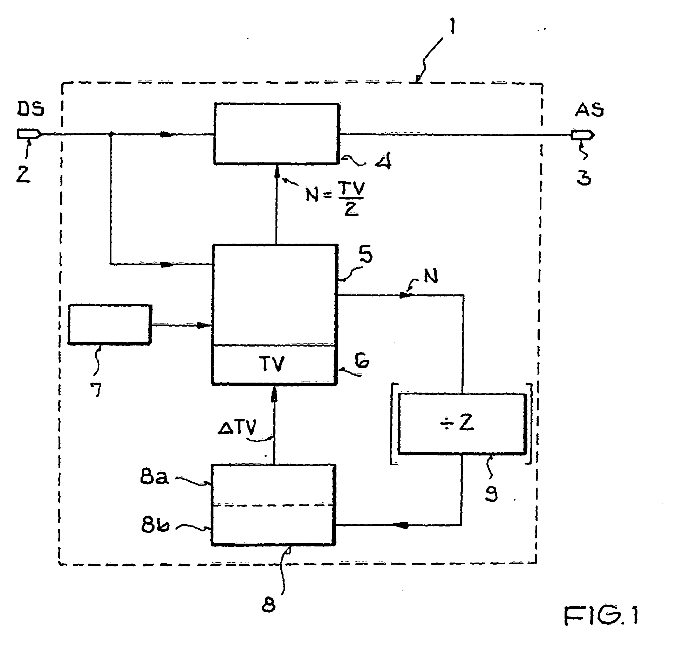

Die Fig. 1 zeigt anhand eines Blockschaltbilds den prinzipiellen Aufbau einer erfindungsgemäßen Vorrichtung 1. Diese weist zunächst einen Eingang 2 für ein serielles Datensignal DS mit Datentakt DT sowie einen Ausgang 3 zum Ausgeben aus dem Signal DS abgefragter (Daten-)Bits als Ausgangssignal AS auf. Die Datenabfrage selbst erfolgt durch zwischen dem Eingang 2 und dem Ausgang 3 eingeschleifte Abfragemittel 4.

Mit diesen sowie mit dem Eingang 2 verbunden besitzt die erfindungsgemäße Vorrichtung 1 weiterhin Zählermittel 5 in Form eines Abwärtszählers (Down-Counter), die mit Speichermitteln 6 zum (Zwischen-)Speichern von Zählwerten N sowie Zahlenwerten TV zum Beeinflussen der Zählermittel 5 und der Abfragemittel 4 zusammenwirken. Die Zählermittel 5 sind darüber hinaus zum Empfangen von Taktpulsen eines internen Oszillators 7 ausgebildet, beispielsweise eines RC-Oszillators mit einer nominellen Taktfrequenz von 400 kHz ($\pm$ 10%). Grundsätzlich ist eine erfindungsgemäße Vorrichtung auch unter Verwendung eines Aufwärtszählers ausführbar.

Die Speichermittel 6 stehen in Wirkverbindung mit Rechenmitteln 8, die ihrerseits zum Anpassen der Beeinflussungswerte TV in Abhängigkeit von einem Ausgangssignal (Zählwert N) der Zählermittel 5 vorgesehen sind. Zwischen Zählermittel 5 und Rechenmittel 8 können zusätzlich Dividiermittel 9 eingeschleift sein, die im Zuge der gezeigten Ausgestaltung der Erfindung insbesondere für eine Division des Zählwerts N durch den Wert Zwei ausgebildet sind.

Wie durch die eckige Klammer in Fig. 1 angedeutet, handelt es sich bei den Dividiermitteln 9 um einen optionalen Bestandteil der erfindungsgemäßen Vorrichtung 1; insbesondere kann deren Funktion auch durch eine geeignete Ausbildung der Rechenmittel 8 mit übernommen werden.

Die erfindungsgemäße Vorrichtung 1 gemäß der Fig. 1 arbeitet wie folgt: Um das Teilerverhältnis TV zwischen dem internen Takt IT des Oszillators 7 und dem Datentakt DT zu bestimmen, wird die Anzahl N der Takte des internen Oszillators 7 zwischen zwei fallenden Flanken des Datensignals DS, d.h. einer Signalfolge "1010" ("1": HIGH-Pegel; "0": LOW-Pegel) durch die Zählermittel 5 gezählt. Eine Ermittlung der Taktzahl zwischen einer fallenden und einer steigenden Flanke (Signalfolge "1001") könnte im Falle einer falsch liegenden Komparatorschwelle in den Abfragemitteln 4 am zur Datenübertragung genutzten Bus (nicht gezeigt) zu Fehlern führen. Wie einleitend erwähnt, ist darüber hinaus auch eine Auswertung zwischen steigenden Flanken ("0101") des Datensignals möglich. Im Folgenden wird exemplarisch nur die erstgenannte Ausführungsform der Erfindung (Ermittlung der Taktzahl zwischen fallenden Signalflanken) erläutert, ohne dass die Erfindung hierauf beschränkt wäre.

Die Zählermittel 5 werden immer dann gestartet, wenn auf dem Bus, d.h. im Datensignal DS eine fallende Flanke auftritt, und zählen bei jedem internen Takt (nach jeder vergangenen internen Taktperiode $DT^{-1}$) weiter. Die nächste fallende Flanke stoppt die Zählermittel 5 wieder. Damit entspricht der Zähl= wert N der Anzahl interner Takte zwischen zwei fallenden Flanken.

Der Zählwert N wird anschließend in den Dividiermitteln 9 durch Zwei geteilt und in den Rechenmitteln 8 weiter verarbeitet. Bereits mittels der vorgeschlagenen Division durch Zwei wird prinzipiell das Teilverhältnis TV zwischen internem Oszillatortakt IT und Datentakt DT bestimmt, da der Abstand zwischen zwei fallenden Flanken grundsätzlich gerade zwei Daten= takt-Perioden $DT^{-1}$ entspricht. Die Dividiermittel 9 können daher erfindungsgemäß auch als Bestimmungsmittel für das Teilerverhältnis TV angesehen werden.

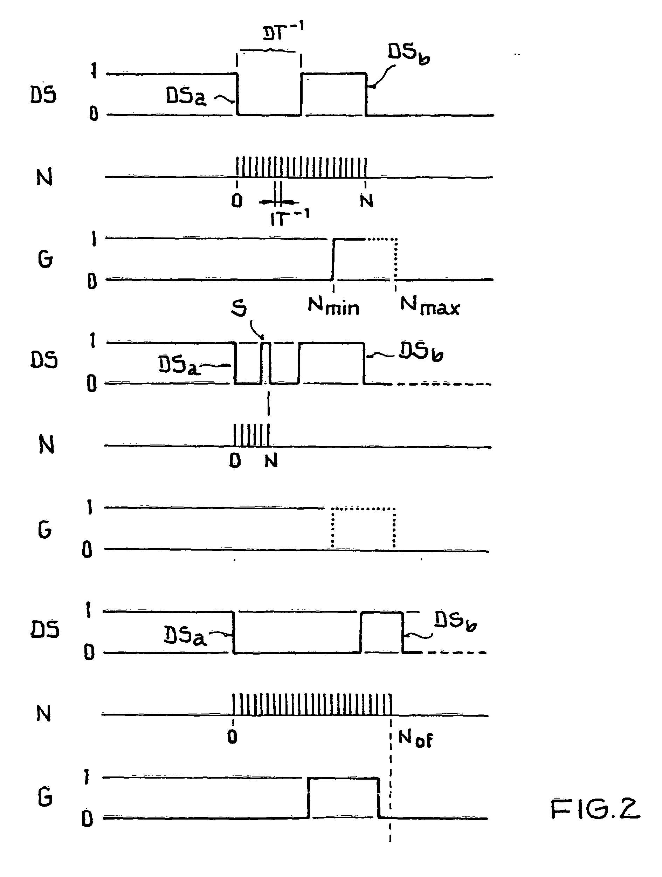

Die Datenabfrage in den Abfragemitteln 4 erfolgt erfindungsgemäß dann, wenn der Zählwert N gerade der Hälfte des Teilerverhältnisses TV zwischen internem Takt IT und Datentakt DT entspricht. Bei korrekter Synchronisation wird dann jedes Datenbit genau in der (zeitlichen) Mitte seines Pegelverlaufs abgefragt und somit richtig aus dem Bus "gelesen". Da insbesondere der interne Takt IT aufgrund von Fertigungstoleranzen des Oszillators 7 oft nur unzureichend genau bekannt ist und sich darüber hinaus während des Betriebs mit der Temperatur ändern kann, wird das Teilerverhältnis TV erfindungsgemäß permanent angepasst, wobei der jeweils aktuelle Wert, der nach dem Vorstehenden den Abfragezeitpunkt bestimmt, in den Speichermitteln 6 abgelegt wird. Würde allerdings der jeweils ermittelte Zählwert N direkt als neuer Teiler übernommen, so könnte ein einzelner Fehler, beispielsweise ein Spike S aufgrund einer Störung auf dem Bus (vgl. Fig. 2) sofort zu einem vollständigen Synchronisationsverlust führen. Daher wird der Zählwert N im Rahmen der vorliegenden Erfindung mit dem aktuellen Teiler verglichen und Letzterer anschließend ggf. schrittweise angepasst.

Dies geschieht - nach der bereits erwähnten Division - in den Rechenmitteln 8 der Vorrichtung 1, die demnach als Vergleichs- und Anpassungsmittel 8a bzw. 8b (Fig. 1) fungieren. Die Regeln zur Anpassung des Teilerverhältnisses TV, zu deren Ausführung die Rechenmittel 8 vorzugsweise programmtechnisch ausgebildet sind, lauten:

$$TV' = TV + 1, \text{ für } N/2 > TV;$$

$$TV' = TV - 1, \text{ für } N/2 < TV;$$

$$TV' = TV \quad , \text{ für } N/2 = TV;$$

wobei TV das vorgegebene, d.h. in den Speichermitteln 6 abgelegte Teilerverhältnis, TV' das angepasste (abzuspeichernde) Teilerverhältnis und N den Zählwert bezeichnet. Direkt nach einem Reset der Vorrichtung 1 liegt naturgemäß noch kein aus dem Datensignal DS ermittelter Teiler TV vor; in diesem Fall wird daher für diesen ein bestimmter Default-Wert angenommen.

Erfindungsgemäß wird folglich im Falle einer falschen Anpassung, z.B. aufgrund eines Signalfehlers am Bus, trotzdem noch eine korrekte Abfrage der Daten durchgeführt, da die Anpassung des Teilerverhältnisses von Zyklus zu Zyklus wertmäßig nur gering ist, $\Delta TV := TV'-TV = 0, \pm 1$ (Fig. 1). Zudem wird schon beim nächsten gültigen Synchronisationsversuch, in der Regel schon beim nächsten Datenbit, der Anpassungsfehler wieder Korrigiert. Das erfindungsgemäße Verfahren besitzt somit eine hohe Toleranzen gegenüber Störungen auf dem Bus.

Die ermittelte Anzahl N interner Takte zwischen zwei fallenden Signalflanken muss jedoch nicht immer zwei Bit an Daten entsprechen: So ergeben sich entsprechend höhere Zählwerte für den Fall mehrerer Bits mit gleichem Wert (über mehrere Takte konstanter Signalpegel) bzw. niedrigere Werte im Falle der bereits angesprochenen Bus-Störungen. Um solche Zählwerte bei der Anpassung des Teilerverhältnisses TV von vornherein auszuschließen und so eine Verfälschung der Synchronisation zu verhindern, ist im Rahmen der Erfindung für den Zählwert N ein Gültigkeitsbereich G definiert, der durch die Rechenmittel 8 überwacht wird. Nur für $N \in G$ erfolgt demnach eine Anpassung des Teilerverhältnisses TV. Der Gültigkeitsbereich kann sich z.B. aus den maximalen Abweichungen des Oszillators 7 ergeben: Für eine Datenrate von 2400 Bit/s findet man mit den angegebenen Werten für die Oszillatorfrequenz

$$TV_{max} = 440000/2400 \cong 183,$$

$$TV_{soll} = 400000/2400 \cong 167,$$

und

$$TV_{min} = 360000/2400 \cong 150.$$

Dabei ist insbesondere auch ein Überlaufen der Zählermittel 5 zu verhindern, so dass nicht ein eventuell falscher Zählwert nach dem Überlauf als gültig interpretiert wird.

Die vorstehend detailliert erläuterten Sachverhalte sind abschließend in der Fig. 2 nochmals graphisch dargestellt. Dabei ist jeweils mit DS das Datensignal auf dem Bus bezeichnet, N steht für den erfindungsgemäß ermittelten Zählwert, wobei die Folge kurzer vertikaler Striche jeweils Zählereignisse mit zeitlichem Abstand IT$^{-1}$ in den Zählermitteln 5 (Fig. 1) darstellen; bei G ist der Gültigkeitsbereich des Zählwerts in Form eines "logischen Fensters" (0: ungültig; 1: gültig) angeben, $N_{min/max} = 2TV_{min/max}$.

Im oberen Teilbild der Fig. 2 ist der zwischen zwei fallenden Flanken DSa, DSb des Datensignals DS ermittelte Zählwert N gültig und wird zum Anpassen des Teilerverhältnisses TV herangezogen; im mittleren Teilbild ist der Zählwert ungültig (Bus-Störung S), ebenso im unteren Teilbild, wobei hier zusätzlich ggf. das Überlaufen der Zählermittel (Überlaufwert $N_{of}$) durch geeignete Ausbildung der Rechenmittel 8 (Fig. 1) abgefangen werden muss.

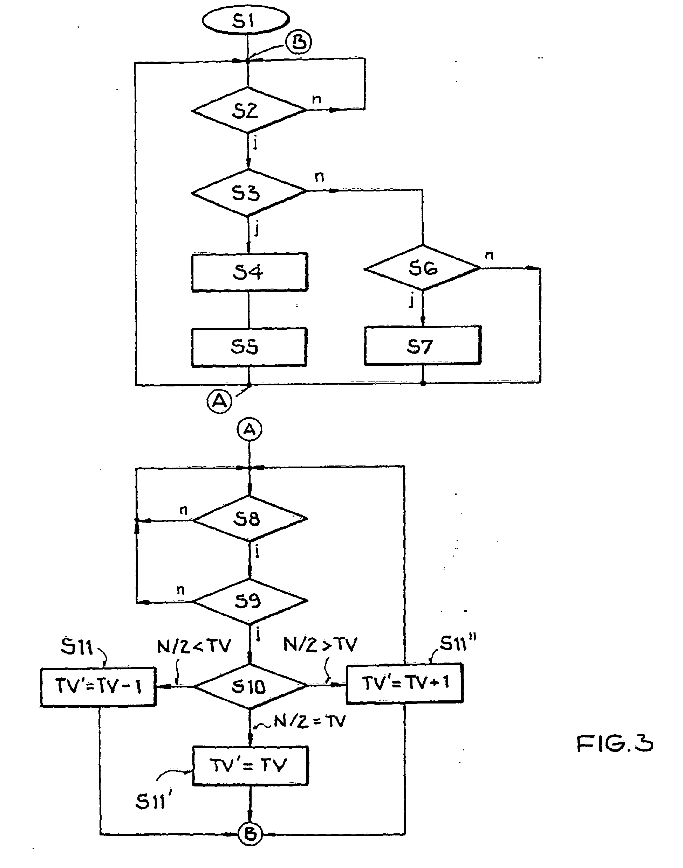

Die Fig. 3 zeigt noch einmal den Ablauf des erfindungsgemäßen Verfahrens anhand eines Ablaufdiagramms. Das Verfahren startet in Schritt S1. Anschließend erfolgt in Schritt S2 eine zyklische Abfrage, ob ein Taktpuls des internen Oszillators 7 (Fig. 1) empfangen wurde. Sobald dies der Fall ist (j), erfolgt eine weitere Abfrage in Schritt S3, ob das Datensignal auf dem Bus eine fallende Flanke aufweist. Wird diese Abfrage bejaht (j), so wird der derzeitige Zählwert N in Schritt S4 in den Speichermitteln 6 (Fig. 1) (zwischen-)gespeichert und in einem anschließenden Schritt S5 der Zählwert auf Null zurück gesetzt. Danach wird das Verfahren mit Schritt S2 fortgesetzt.

Wird die Abfrage S3 verneint (n), so erfolgt in Schritt S6 eine weitere Abfrage dahingehend, ob N < $N_{of}$ (s.o.). Ist dies der Fall (j), wird der Zählwert N um den Wert Eins inkrementiert (Schritt S7) und das Verfahren wiederum mit Schritt S2 fortgesetzt. Im Falle einer verneinten Abfrage S6 (n) erfolgt der Rücksprung nach Schritt S2 ohne Inkrementierung des Zählwerts.

An einen erfolgten Schritt S5 schließt sich bei "A" der nachfolgend beschriebene, in den Rechenmitteln 6 ablaufende Verfahrensablauf zum Anpassen des Teilerverhältnisses TV an: Zunächst ergeht in Schritt S8 eine weitere zyklische Abfrage, ob ein Taktpuls des internen Oszillators 7 (Fig. 1) empfangen wurde. Wird diese Abfrage bejaht (j), so erfolgen in Schritt S9 weitere Abfragen (hier der Übersichtlichkeit halber zusammengefasst dargestellt) dahingehend, ob der in den Speichermitteln 6 abgelegte Zählwert N innerhalb des Gültigkeitsbereichs (s.o.) liegt, d.h. ob $N_{min} \leq N \leq N_{max}$, und ob der entsprechende Wert noch nicht berücksichtigt wurde. Für den Fall, dass alle diese Abfragen bejaht werden (j), wird im nachfolgenden Schritt S10 der Wert für N mit dem aktuell gültigen, in den Speichermitteln 6 (Fig. 1) abgelegten Teiler TV verglichen. Je nach Ergebnis des Vergleichs, N/2 < TV, N/2 = TV oder N/2 > TV, wird in Schritt S11, S11' bzw. S11'' die erfindungsgemäße Anpassung des Teilerverhältnisses vorgenommen: TV' = TV - 1, TV' = TV bzw. TV' = TV + 1. Anschließend wiederholt sich der dargestellte Ablauf ausgehend vom Punkt "B".

Dabei erfolgt die Übernahme des neuen Teilerverhältnisses TV' immer am Ende eines Bits bzw. am Beginn eines neuen Bits. Es ist darauf zu achten, dass sich das Teilerverhältnis nicht in der Mitte eines Bits ändert, da sonst eventuell doppelt, nämlich bei TV (altes Teilerverhältnis) und bei TV' (neues Teilerverhältnis) abgefragt wird.

**Bezugszeichenliste**

| | |
|---|---|
| 1 | Vorrichtung |
| 2 | Eingang |
| 3 | Ausgang |
| 4 | Abfragemittel |
| 5 | Zählermittel |
| 6 | Speichermittel |
| 7 | Oszillator |
| 8 | Rechenmittel |
| 8a | Vergleichsmittel |

| 8b | Anpassungsmittel |
| 9 | Dividiermittel, Bestimmungsmittel |
| AS | Ausgangssignal |
| DS | Datensignal |
| DSa,DSb | fallende Flanke |
| DT | Datentakt |
| $DT^{-1}$ | Datenperiode |
| G | Gültigkeitsbereich |
| IT | interner Oszillatortakt |
| $IT^{-1}$ | Oszillatorperiode |
| N | Zählwert |
| $N_{min}$ | kleinster zulässiger Zählwert |
| $N_{max}$ | größter zulässiger Zählwert |
| $N_{of}$ | Überlaufwert |
| S | Bus-Störung, Spike |
| S1-S11' | Verfahrensschritt |
| TV, TV' | Teiler(-verhältnis) |
| $\Delta TV$ | Anpassung |

**Patentansprüche**

1. Verfahren zum Synchronisieren einer Funktionseinheit auf eine Taktfrequenz (DT) eines Signals (DS), insbesondere eines Datensignals, wobei Takte eines internen Oszillators (7) der Funktionseinheit zwischen vorbestimmten Flan= ken (DSa, DSb) des Signals gezählt werden, aus der Taktfrequenz des internen Oszillators und dem Zählwert ein Teilerverhältnis (N/2) zwischen Signaltakt (DT) und internem Oszillatortakt (IT) durch Division bestimmt und mit einem vorgegebenen Teilerverhältnis (TV) der Funktionseinheit verglichen wird, woraufhin in Abhängigkeit von dem Vergleichsergebnis ein Anpassen des vorgegebenen Teilerverhältnisses (TV) durch Addieren oder Subtrahieren eines Wertes aus einer Anzahl vorgegebener Werte (0, $\pm 1$) erfolgt,
   **dadurch gekennzeichnet, dass**
   die Takte des internen Oszillators (7) zwischen jeweils zwei fallenden Flanken (DSa, DSb) oder zwei steigenden Flanken des Signals (DS) gezählt werden.

2. Verfahren nach Anspruch 1, **dadurch gekennzeichnet, dass** das Anpassen des Teilerverhältnis (TV) nach folgenden Regeln erfolgt:

$$TV' = TV + 1, \text{ für } N/2 > TV;$$

$$TV' = TV - 1, \text{ für } N/2 < TV;$$

$$TV' = TV \qquad , \text{ für } N/2 = TV;$$

   wobei TV das vorgegebene Teilerverhältnis, TV' das angepasste Teilerverhältnis und N den Zählwert bezeichnet.

3. Verfahren nach Anspruch 1 oder 2, **dadurch gekennzeichnet, dass** bei einem Erreichen der zweiten vorbestimmten Signalflanke (DSb) der Zählwert (N) zurückgesetzt und das angepasste Teilerverhältnis (TV') als Vorzugebendes Teilerverhältnis (TV) gespeichert wird.

4. Verfahren nach einem der Ansprüche 1 bis 3, **dadurch gekennzeichnet, dass** bei Verlassen eines Gültigkeitsbereichs (G) für den Zählwert (N) keine Anpassung des Teilerverhältnisses (TV) erfolgt.

5. Verfahren nach einem der Ansprüche 1 bis 4, **dadurch gekennzeichnet, dass** das Verfahren permanent während einer Übertragung des Signals (DS), insbesondere während einer Datenübertragung, durchgeführt wird.

6. Vorrichtung (1) zum Synchronisieren einer Funktionseinheit auf eine Taktfrequenz (DT) eines Signals (DS), insbesondere eines Datensignals, aufweisend:

Zählermittel (5) zum Bestimmen einer Anzahl (N) von Takten eines internen Oszillators (7) der Funktionseinheit zwischen vorbestimmten Flanken (DSa, DSb) des Signals (DS); Bestimmungsmittel (9), die zum Bestimmen eines Teilerverhältnisses (N/2) zwischen Signaltakt (DT) und internem Oszillatortakt (IT) durch Division ausgebildet sind; Vergleichsmittel (8a) zum Vergleichen des Teilerverhältnisses (N/2) mit einem vorgegebenen Teilerverhältnis (TV) der Funktionseinheit; und
Anpassungsmittel (8b) zum Anpassen des vorgegebenen Teilerverhältnisses (TV) in Abhängigkeit von dem Vergleichsergebnis, die zum Addieren und Subtrahieren eines Wertes aus einer Anzahl vorgegebener Werte (0, $\pm$1) ausgebildet sind,

**dadurch gekennzeichnet, dass**
die Zählermittel (5) zum Zählen der Takte (IT) des internen Oszillators (7) zwischen jeweils zwei fallenden Flanken (DSa, DSb) oder zwei steigenden Flanken des Signals (DS) ausgebildet sind.

7. Vorrichtung nach Anspruch 6, **dadurch gekennzeichnet, dass** die Anpassungsmittel (8b) zum Anpassen des Teilerverhältnisses (TV) nach folgenden Regeln ausgebildet sind:

$$TV' = TV + 1, \text{ für } N/2 > TV;$$

$$TV' = TV - 1, \text{ für } N/2 < TV;$$

$$TV' = TV \qquad , \text{ für } N/2 = TV;$$

wobei TV' das angepasste Teilerverhältnis bezeichnet.

8. Vorrichtung nach Anspruch 6 oder 7, **gekennzeichnet durch** Speichermittel (6) zum Speichern des angepassten Teilerverhältnisses (TV') als neu vorzugebendes Teilerverhältnis (TV).

9. Vorrichtung nach einem der Ansprüche 6 bis 8, **dadurch gekennzeichnet, dass** die Vergleichs- und/oder Anpassungsmittel (8a, 8b) zum Verhindern einer Anpassung des Teilerverhältnisses (TV) bei Verlassen eines Gültigkeitsbereichs (G) für den Zählwert (N) ausgebildet sind.

**Claims**

1. Method of synchronising a functional unit to a clock pulse frequency (DT) of a signal (DS), particularly of a data signal, wherein clock pulses of an internal oscillator (7) of the functional unit are counted between predetermined flanks (DSa, DSb) of the signal, a divider ratio (N/2) between signal clock pulse (DT) and internal oscillator clock pulse (IT) are determined by division from the clock pulse frequency of the internal oscillator and the count value and is compared with a predetermined divider ratio (TV) of the functional unit, whereupon an adaptation of the predetermined divider ratio (TV) takes place in dependence on the comparison result by addition or subtraction of a value to or from a number of predetermined values (0, $\pm$1), **characterised in that** the clock pulses of the internal oscillator (7) are counted between each two falling flanks (DSa, DSb) or two rising flanks of the signal (DS).

2. Method according to claim 1, **characterised in that** the adaptation of the divider ratio (TV) is carried out according to the following rules:

$$TV' = TV + 1, \text{ for } N/2 > TV;$$

$$\grave{\ } TV' = TV - 1, \text{ for } N/2 < TV;$$

$$TV' = TV \quad, \text{ for } N/2 = TV;$$

wherein TV denotes the predetermined divider ratio, TV' denotes the adapted divider ratio and N denotes the count value.

3. Method according to claim 1 or 2, **characterised in that** on attainment of the second predetermined signal flank (DSb) the count value (N) is reset and the adapted divider ratio (TV') is stored as divider ratio (TV) to be preset.

4. Method according to one of claims 1 to 3, **characterised in that** on leaving a validity range (G) for the count value (N) no adaptation of the divider ratio (TV) takes place.

5. Method according to one of claims 1 to 4, **characterised in that** the method is carried out permanently during a transmission of the signal (DS), particularly during a data transmission.

6. Device (1) for synchronising a functional unit to a clock pulse frequency (DT) of a signal (DS), particularly a data signal, comprising: counter means (5) for determining a number (N) of clock pulses of an internal oscillator (7) of the functional unit between predetermined flanks (DSa, DSb) of the signal (DS); determining means (9) constructed for determination of a divider ratio (N/2) between signal clock pulse (DT) and internal oscillator clock pulse (IT) by division; comparison means (8a) for comparison of the divider ratio (N/2) with a predetermined divider ratio (TV) of the functional unit; and adapting means (8b) for adapting the predetermined divider ratio (TV) in dependence on the comparison result, which are constructed for addition and subtraction of a value to and from a number of predetermined values $(0, \pm 1)$, **characterised in that** the counter means (5) are constructed for counting the clock pulses (IT) of the internal oscillator (7) between each two falling flanks (DSa, DSb) or two rising flanks of the signal (DS).

7. Device according to claim 6, **characterised in that** the adapting means (8b) are constructed for adapting the divider ratio (TV) according to the following rules:

$$TV' = TV + 1, \text{ for } N/2 > TV;$$

$$TV' = TV - 1, \text{ for } N/2 < TV;$$

$$TV' = TV \quad, \text{ for } N/2 = TV;$$

wherein TV' denotes the adapted divider ratio.

8. Device according to claim 6 or 7, **characterised by** memory means (6) for storage of the adapted divider ratio (TV') as a new divider ratio (TV) to be preset.

9. Device according to one of claims 6 to 8, **characterised in that** the comparison and/or adapting means (8a, 8b) are constructed for preventing adaptation of the divider ratio (TV) on leaving a validity range (G) for the count value (N).

**Revendications**

1. Procédé de synchronisation d'une unité fonctionnelle sur la fréquence d'horloge (DT) d'un signal (DS), plus particulièrement d'un signal de données, dans lequel des cycles d'un oscillateur interne (7) de l'unité fonctionnelle sont comptés entre des flancs prédéterminés (DSa, DSb) du signal, dans lequel on détermine par division, à partir de la fréquence d'horloge de l'oscillateur interne et de la valeur de comptage, un rapport de division (N/2) entre la fréquence du signal (DT) et la cadence de l'oscillateur interne (IT) que l'on compare à un rapport de division prédéfini (TV) de l'unité fonctionnelle, dans lequel on effectue ensuite en fonction du résultat de la comparaison un ajustement du rapport prédéfini de division (TV) en ajoutant ou en retranchant une valeur choisie parmi un certain nombre de valeurs prédéfinies (0, $\pm$1),
**caractérisé en ce que**
les cycles de l'oscillateur interne (7) sont comptés respectivement entre deux flancs (DSa, DSb) descendants ou deux flancs montants du signal (DS).

**2.** Procédé selon la revendication 1, **caractérisé en ce que** l'ajustement du rapport de division (TV) s'effectue selon les règles suivantes:

$$\texttt{TV' = TV + 1, pour N/2 > TV ;}$$

$$\texttt{TV' = TV - 1, pour N/2 < TV ;}$$

$$\texttt{TV' = TV\ \ \ \ , pour N/2 = TV ;}$$

dans lesquelles TV désigne le rapport de division prédéterminé, TV' le rapport de division ajusté et N la valeur de comptage.

**3.** Procédé selon la revendication 1 ou 2, **caractérisé en ce que** lorsque le deuxième flanc de signal prédéfini (DSb) est atteint, on remet à zéro la valeur de comptage (N) et on mémorise le rapport de division ajusté (TV') comme rapport prédéfini de division (TV).

**4.** Procédé selon l'une quelconque des revendications 1 à 3, **caractérisé en ce qu'**en quittant une zone de validité (G) pour la valeur de comptage (N) on n'effectue aucun ajustement du rapport de division (TV).

**5.** Procédé selon l'une quelconque des revendications 1 à 4, **caractérisé en ce que** le procédé est effectué de manière permanente durant une transmission du signal (DS), plus particulièrement durant une transmission de données.

**6.** Procédé (1) de synchronisation d'une unité fonctionnelle sur une fréquence d'horloge (DT) d'un signal (DS), plus particulièrement d'un signal de données, comportant :

des moyens de comptage (5) pour déterminer un nombre (N) de cycles d'un oscillateur interne (7) de l'unité fonctionnelle entre des flancs prédéterminés (DSa, DSb) du signal (DS) ;
des moyens de détermination (9) conçus pour déterminer par division un rapport de division (N/2) entre la fréquence de signal (DT) et les cycles de l'oscillateur interne (IT) ;
des moyens de comparaison (8a) pour comparer le rapport de division (N/2) à un rapport prédéfini de division (TV) de l'unité fonctionnelle ; et
des moyens d'ajustement (8b) pour ajuster le rapport prédéfini de division (TV) en fonction du résultat de la comparaison, conçus pour ajouter et retrancher une valeur choisie parmi un certain nombre de valeurs prédéfinies (0, $\pm$1),

**caractérisé en ce que**
les moyens de comptage (5) sont prévus pour compter les cycles (IT) de l'oscillateur interne (7) entre respectivement deux flancs descendants (DSa, DSb) ou deux flancs montants du signal (DS).

**7.** Dispositif selon la revendication 6, **caractérisé en ce que** les moyens d'ajustement (8b) pour ajuster le rapport de division (TV) sont conçus selon les règles suivantes :

$$\texttt{TV' = TV + 1, pour N/2 > TV ;}$$

$$\texttt{TV' = TV - 1, pour N/2 < TV ;}$$

$$TV' = TV \quad , \text{ pour } N/2 = TV \ ;$$

dans lesquelles TV' désigne le rapport de division ajusté.

8. Dispositif selon la revendication 6 ou 7, **caractérisé par** des moyens de mémorisation (6) pour mémoriser le rapport de division ajusté (TV') comme nouveau rapport prédéfini de division (TV).

9. Dispositif selon l'une quelconque des revendications 6 à 8, **caractérisé en ce que** les moyens de comparaison et/ou d'ajustement (8a, 8b) sont conçus pour empêcher un ajustement du rapport de division (TV) lorsque l'on quitte une zone de validité (G) pour la valeur de comptage (N).

FIG.1

FIG.2

S1

S2 — n

↓ j

S3 — n

↓ j

S4

S5

S6 — n

↓ j

S7

A

A

S8 — n

↓ j

S9 — n

↓ j

S11

$N/2 < TV$   $N/2 > TV$   S11"

$TV' = TV - 1$   S10   $TV' = TV + 1$

$N/2 = TV$

$TV' = TV$

S11'

B

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02076031 A2
- EP 0312671 A1